# FASCICULE DE BREVET EUROPEEN

(11) **EP 1 758 970 B1**
(45) Date de publication et mention de la délivrance du brevet: **23.12.2009**
(21) Numéro de dépôt: 05751611.4
(22) Date de dépôt: 05.04.2005
(51) Int. Cl.: C10L 3/00

(54) **MELANGE ODORISANT POUR COMBUSTIBLE GAZEUX INODORE**
GERUCHSMISCHUNG FÜR GERUCHLOSES BRENNGAS
ODORIZING MIXTURE FOR AN ODORLESS GAS FUEL

(30) Priorité: 08.04.2004 FR 0403698
(43) Date de publication de la demande: 07.03.2007
(73) Titulaire: ARKEMA FRANCE, 92700 Colombes (FR)
(72) Inventeur: CHARLES, Patrick, F-Sauvagnon (FR)
(74) Mandataire: Lhoste, Catherine
(86) Numéro de dépôt international: PCT/FR2005/000823
(87) Numéro de publication internationale: WO 2005/103210

(56) Documents cités:
- WO-A-2004/024852
- US-A- 4 487 613
- US-A- 5 282 957
- US-A- 5 312 459
- PATENT ABSTRACTS OF JAPAN vol. 005, no. 008 (C-039), 11 avril 1979 (1979-04-11) & JP 55 137190 A (TOKYO GAS CO LTD), 25 octobre 1980 (1980-10-25) cité dans la demande

## Description

La présente invention concerne le domaine des odorisants pour les combustibles gazeux, notamment inodores, et a plus spécialement pour objet une composition comprenant un sulfure d'alkyle et un acrylate d'alkyle permettant la détection des fuites de gaz et la prévention des risques d'explosion qui en découlent.

Les gaz de ville et les gaz de fours à coke qui étaient obtenus par des procédés thermiques, ont longtemps été utilisés dans le passé comme combustibles gazeux tant pour l'éclairage public que pour les besoins domestiques. Ces gaz contenaient des composants fortement odoriférants. Ils avaient par conséquent une forte odeur propre, de sorte qu'une fuite de gaz pouvait être aisément décelée.

Au contraire, les combustibles gazeux utilisés de nos jours, qu'il s'agisse de gaz naturel, de propane, de butane, de gaz de pétrole liquéfié (ou GPL), ou même d'oxygène (par exemple pour les soudures), sont essentiellement inodores, soit en raison de leur origine, soit en raison du traitement de purification qu'ils ont reçu.

Ainsi si des fuites ne sont pas perçues à temps, il se forme rapidement des mélanges de combustible gazeux et d'air pouvant exploser, avec par conséquent un haut potentiel de risque.

C'est pour ces raisons de sécurité, que le gaz naturel circulant dans les gazoducs est odorisé par injection (dans des stations spécialisées) d'additifs appropriés appelés odorisants.

Le gaz naturel est en général acheminé inodore vers les pays consommateurs depuis les sites de production, après un traitement de purification approprié, soit par gazoduc, soit (à l'état liquide) dans des bateaux spécialisés (méthaniers). En France par exemple, le gaz naturel est ainsi reçu dans un nombre limité de stations d'injection où l'odorisant est injecté de telle sorte que le gaz naturel qui circule aussi bien dans le réseau français de gazoduc, que celui qui est stocké dans des réservoirs souterrains est odorisé, ce qui permet une détection aisée en cas de fuite, quelle que soit la portion du réseau où elle se produise.

Dans d'autres pays, le gaz naturel peut être distribué sur le territoire par un réseau de gazoducs dans lequel il circule sans agent odorisant, celui-ci étant alors odorisé à l'entrée des villes où il est consommé, ce qui nécessite un nombre encore plus élevé de stations d'injection.

Les bacs de stockage sont le plus souvent maintenus sous atmosphère d'azote ou de gaz naturel afin de limiter, à ce stade, les risques d'explosion.

On connaît des sulfures d'alkyle utilisés comme agents odorisants, seuls ou en mélange. On peut citer par exemple le diéthylsulfure, le diméthylsulfure, le méthyléthylsulfure ou le tétrahydrothiophène qui sont largement utilisés pour leurs excellentes propriétés, notamment propres à déclencher une sensation d'alarme auprès des personnes en cas de fuite accidentelle du gaz naturel ainsi odorisé, et à lancer les opérations de sauvegarde nécessaires.

Ces produits génèrent toutefois lors de la combustion du gaz naturel une quantité d'anhydride sulfureux qui, pour faible qu'elle soit, devient non négligeable lorsqu'un bilan global est effectué à l'échelle d'un pays ou d'une région, notamment à taux d'industrialisation ou d'urbanisation élevé. Ainsi, à titre d'exemple, la combustion d'un gaz naturel odorisé avec du tétrahydrothiophène à une concentration de 10 mg/Nm³ (ou nombre de m³ du gaz, mesuré dans les conditions normales de température et de pression) génère 7,3 mg/Nm³ de dioxyde de soufre.

Dans le cadre général d'une meilleure prise en compte des contraintes environnementales, il est donc souhaitable de réduire les quantités de SO₂ rejetées dans l'écosphère par le biais des agents odorisants à base de sulfures d'alkyle présents dans le gaz naturel, lors de la combustion de celui-ci.

L'utilisation d'acrylate d'alkyle comme composants de mélanges odorisants de gaz est par ailleurs décrite dans la littérature.

Ainsi, la demande DE 19837066 mentionne un procédé d'odorisation du gaz naturel par addition d'un mélange comprenant un acrylate d'alkyle, un composé azoté de type pyrazine, et un antioxydant. Ce mélange présente toutefois l'inconvénient de ne pas avoir une odeur caractéristique de gaz et est donc susceptible de prêter à confusion en cas de fuite de gaz. Le risque est bien sûr la non-détection de cette fuite et l'explosion, si la concentration en gaz dans l'air atteint sa limite inférieure d'explosivité.

On connaît également par le brevet JP55-137190 un mélange odorisant associant à l'acrylate d'éthyle un composé soufré spécifique, en l'espèce le tertiobutyl mercaptan (ou TBM). L'inconvénient majeur de ce mélange est toutefois, qu'en raison de la réactivité chimique du TBM avec l'acrylate d'éthyle, les 2 composants du mélange odorisant doivent, dans les différentes stations d'injection, être stockées dans des bacs séparés et nécessitent également des pompes et des têtes d'injection séparées, pour introduction dans le gazoduc. Il en résulte, eu égard à la logistique complexe d'odorisation du gaz naturel exposée plus haut, une augmentation considérable des coûts des stations d'injection découlant de la nécessaire multiplication des bacs de stockage, des pompes et des têtes d'injection.

Par ailleurs, la demande WO 2004/024852 décrit un agent odorisant constitué de quatre composants dont un acrylate d'alkyle, un sulfure d'alkyle et un agent stabilisant antioxydant tel que le tert-butylhydroxytoluène, l'hydroquinone etc.

La présente invention a pour but de proposer un nouveau mélange odorisant, remédiant notamment aux inconvénients des mélanges odorisants de l'art antérieur exposés précédemment.

La présente invention a ainsi pour objet une composition utilisable notamment comme agent odorisant d'un combustible gazeux, plus particulièrement du gaz naturel, comprenant :
- de 0,1 à 49,9 % d'un sulfure d'alkyle (I) de formule :

   R¹-S-R²
dans laquelle R¹ et R², identiques ou différents, représentent :
- un radical alkyle comprenant de 1 à 4 atomes de carbone ; ou
- R¹ et R² pris avec l'atome de soufre auquel ils sont attachés représentent un cycle saturé ou insaturé comprenant de 3 à 5 atomes de carbone, éventuellement substitué par un radical C₁-C₄ alkyle ou C₁-C₄ alcényle ;
- de 50 à 99,8 % d'un acrylate d'alkyle (II) dont le radical alkyle comprend de 1 à 12 atome de carbone, de préférence de 1 à 8 ;
- de 0,001 à 0,1 % d'un composé (III) inhibiteur de polymérisation de l'acrylate d'alkyle (II) comprenant un radical nitroxyde stable de formule (IV). 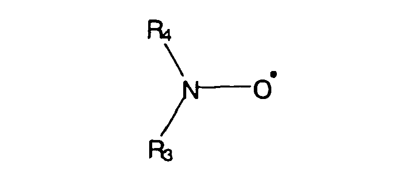
dans laquelle :
- R³ et R⁴, identiques ou différents, représentent chacun un radical hydrocarboné tertiaire ou secondaire comprenant de 2 à 30 atomes de carbone, de préférence de 4 à 15, et éventuellement un ou plusieurs hétéroatomes choisis parmi le soufre, le phosphore, l'azote ou l'oxygène ; ou
- R³ et R⁴ pris avec l'atome d'azote auquel ils sont attachés représentent un radical hydrocarboné cyclique comprenant de 4 à 10 atomes de carbone, de préférence de 4 à 6, le dit radical étant éventuellement substitué.

Les pourcentages indiqués dans le présent texte sont sauf indication contraire des pourcentages en poids.

La composition selon l'invention confère aux combustibles gazeux, notamment au gaz naturel après son injection dans celui-ci, un fort pouvoir odorant, comparable à celui obtenu avec les odorisants à base de sulfure d'alkyle de l'art antérieur, permettant à toute personne se trouvant au voisinage d'une fuite de reconnaître celle-ci, et d'engager les mesures de sécurité appropriées. Ce fort pouvoir odorant est obtenu en même temps qu'une diminution significative des quantités de SO₂ rejetées dans l'écosphère après combustion du gaz ainsi odorisé. Enfin cette composition, du fait de l'absence de réactivité entre les composés (I) et (II) peut être mise en oeuvre dans les stations d'injection au moyen d'un seul bac de stockage, d'une seule pompe et d'une seule tête d'injection, ce qui conduit à une logistique considérablement simplifiée.

Selon une variante préférée de la composition selon l'invention, celle-ci comprend de 5 à 14,95 % de composé (I), de 85 à 94,95 % de composé (II) et de 0,005 à 0,05 % de composé (III).

On préfère utiliser comme sulfure d'alkyle (I) le tétrahydrothiophène (THT), le méthyl éthyl sulfure (MES), le diméthylsulfure (DMS) ou le diéthylsulfure (DES).

L' ester d'acide acrylique (II) est notamment choisi parmi les acrylates de méthyle, d'éthyle, de n-propyle, d'isopropyle, de n-butyle, d'isobutyle, de tert-butyle, de pentyle, d'hexyle, d'heptyle, d'octyle et de dodécyle.

Selon un mode de réalisation préféré de la composition selon l'invention, on utilise l'acrylate de méthyle ou l'acrylate d'éthyle.

Selon une variante de l'invention tout particulièrement préférée, on utilise une composition comprenant le tétrahydrothiophène et l'acrylate d'éthyle.

La présence dans la composition selon l'invention du composé (III) a pour effet d'inhiber la polymérisation des acrylates qui sont des monomères très réactifs pouvant se polymériser spontanément. Une telle polymérisation incontrôlée est susceptible de mettre les personnes se trouvant à proximité des stations d'injection, tels que riverains ou ouvriers en charge de la maintenance en danger, du fait d'un risque d'explosion. Cette polymérisation survenant durant le stockage, y compris par exemple, dans les bacs ou cuves de stockages des stations d'injection, peut conduire également à un encrassement voire un bouchage rapide des tuyaux entre le bac de stockage et le point d'injection. Un tel phénomène peut conduire à une baisse non contrôlée de la concentration de l'odorisant dans le gaz naturel, ce qui augmente le risque lié à une fuite de gaz non détectée.

Les composés de formule (IV) sont connus en soi, et leur préparation est par exemple décrite dans l'ouvrage "Synthetic Chemistry of Stable Nitroxides" par L. B. Volodarsky et al, CRC Press, 1993, ISBN:0-8493-4590-1.

L'inhibiteur de formule (IV) offre l'avantage, contrairement à d'autres inhibiteurs tels les inhibiteurs radicalaires appartenant à la famille des hydroquinones, de ne pas nécessiter un stockage du mélange odorisant sous air. Un stockage sous air est en effet rendu nécessaire pour les inhibiteurs radicalaires de type hydroquinone, du fait que la forme active de l'inhibiteur est une molécule comportant un radical qui se forme à la suite d'une réaction avec l'oxygène. Or il est très intéressant, dans la pratique de la conception des stations d'injection, de pouvoir stocker le mélange odorisant dans la cuve appropriée sous pression de gaz naturel. Une telle modalité de réalisation permet avantageusement d'augmenter le rendement des pompes à injection. L'inhibiteur de formule (IV) offre également l'avantage, pour la même raison, de pouvoir être utilisé dans des bacs de stockage sous azote que l'on rencontre dans certaines stations d'injection du gaz naturel.

Selon une variante particulièrement préférée, on utilise comme inhibiteur de formule (IV) un composé dérivé de la tétraméthyl pipéridine oxyde (également désignée par le terme de TEMPO) de formule (IVa) : 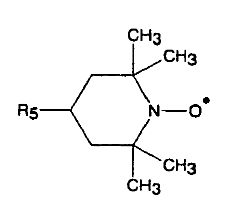 dans laquelle R⁵ représente un groupement hydroxy, amino, R⁶COO-, R⁶CON- , où R⁶ est un radical C₁-C₄ allyle.

On préfère avantageusement choisir le composé de formule (III) parmi les composés suivants :
- composé (A) appelé N-(tertiobutyl)-N-(1-[ethoxy(ethyl)phosphino]propyl) nitroxyde de formule : 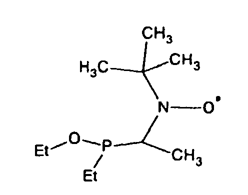
- composé (B) appelé N-(tertiobutyl)-N-(1-diethylphosphono-2,2-dimethylpropyl) nitroxyde de formule 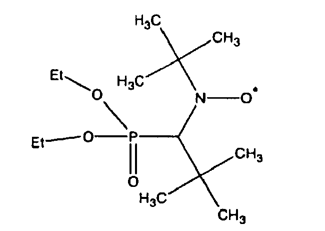
- composé (C) appelé N-(tertiobutyl)-N-([2-methyl-1-phenyl]propyl) nitroxyde de formule :

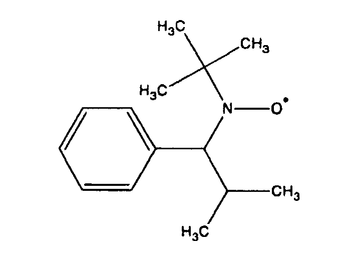

La présente invention a également pour objet un procédé d'odorisation d'un combustible gazeux inodore comprenant l'addition d'une quantité efficace de la composition comprenant un sulfure d'alkyle et un acrylate d'alkyle, telle que définie précédemment. La quantité de la dite composition doit être déterminée par l'homme du métier moyennant des essais systématiques, tenant compte des caractéristiques particulières du combustible gazeux, et des réseaux de distribution. A titre purement indicatif, cette quantité efficace peut être comprise entre 1 et 500 mg/Nm³, de préférence entre 2 et 50 mg/Nm³.

Les combustibles gazeux auxquels s'applique le procédé selon l'invention comprennent : le gaz naturel, le propane, le butane, le gaz de pétrole liquéfié (ou GPL), ou même l'oxygène ou encore l'hydrogène, tel celui généré par les piles à combustible.

Le gaz naturel est un combustible gazeux préféré selon la présente invention en raison de sa très large diffusion et de l'importance des réseaux de distribution, rendant particulièrement désirable la réduction de tout danger découlant d'un risque de fuite.

S'agissant du gaz naturel, la composition utilisable comme agent odorisant est ajoutée par injection dans les stations spécialisées selon les techniques usuelles mise en oeuvre dans ce domaine.

L'invention a enfin pour objet un combustible gazeux, de préférence un gaz naturel, comprenant une quantité comprise entre 1 et 500 mg/Nm³, de préférence entre 2 et 50 mg/Nm³ de la composition comprenant un sulfure d'alkyle et un acrylate d'alkyle, telle que définie précédemment.

Les exemples suivants sont donnés à titre purement illustratif de l'invention et ne sauraient être nullement interprétés pour en limiter la portée.

### Exemple 1 (référence) : Odorisation du gaz naturel par du tétrahydrothiophène

On injecte dans du gaz naturel 10 mg par Nm³ de tétrahydrothiophène au moyen d'un dispositif de laboratoire approprié.

La teneur en dioxyde de soufre formé, après combustion du gaz ainsi odorisé, est égale à 7,3 mg/Nm³.

### Exemple 2 :

La composition suivante est obtenue par simple mélange du poids des composants indiqués à l'état liquide, correspondant au pourcentage en poids également indiqué :

| | | |
|---|---|---|
| Acrylate d'éthyle | 879,9 g | 87,99 % |
| Tétrahydrothiophène | 120 g | 12,00 % |
| Hydroxy TEMPO | 0,1 g | 0,01 % |

On répète ensuite l'exemple 1 en remplaçant le tétrahydrothiophène par la composition ainsi préparée.

Le gaz ainsi odorisé est soumis à un test olfactif, d'où il ressort que le gaz ainsi odorisé a la même odeur typique que le gaz obtenu à l'exemple 1.

La teneur en dioxyde de soufre formé, après combustion du gaz ainsi odorisé, est égale à 0,87 mg/Nm³.

### Exemple 3 :

On répète l'exemple 2 en préparant la composition suivante :

| | | |
|---|---|---|
| Acrylate de méthyle | 899,8 g | 89,98 % |
| Tétrahydrothiophène | 100 g | 10,00 % |
| Inhibiteur (**C**) | 0,2 | 0,02 % |

On obtient les mêmes résultats.

### Exemple 4 :

On répète l'exemple 2 en préparant la composition suivante :

| | | |
|---|---|---|
| Acrylate d'éthyle | 889,9 g | 88,99 % |
| Méthyl éthyl sulfure | 110 g | 11,00 % |
| Hydroxy TEMPO | 0,1 g | 0,01 % |

On obtient les mêmes résultats.

## Revendications

1. Composition utilisable notamment comme agent odorisant d'un combustible gazeux, plus particulièrement du gaz naturel, comprenant :
- de 0,1 à 49,9 % d'un sulfure d'alkyle (I) de formule :
R¹-S-R²
dans laquelle R¹ et R², identiques ou différents, représentent :
- un radical alkyle comprenant de 1 à 4 atomes de carbone ; ou
- R¹ et R² pris avec l'atome de soufre auquel ils sont attachés représentent un cycle saturé ou insaturé comprenant de 3 à 5 atomes de carbone, éventuellement substitué par un radical C₁-C₄ alkyle ou C₁-C₄ alcényle ;
- de 50 à 99,8 % d'un acrylate d'alkyle (II) dont le radical alkyle comprend de 1 à 12 atome de carbone, de préférence de 1 à 8 ;
- de 0,001 à 0,1 % d'un composé (III) inhibiteur de polymérisation de l'acrylate d'alkyle (II) comprenant un radical nitroxyde stable de formule (IV): 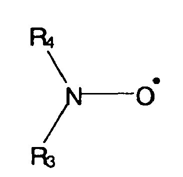
dans laquelle :
- R³ et R⁴, identiques ou différents, représentent chacun un radical hydrocarboné tertiaire ou secondaire comprenant de 2 à 30 atomes de carbone, de préférence de 4 à 15, et éventuellement un ou plusieurs hétéroatomes choisis parmi le soufre, le phosphore, l'azote
ou l'oxygène ; ou
- R³ et R⁴ pris avec l'atome d'azote auquel ils sont attachés représentent un radical hydrocarboné cyclique comprenant de 4 à 10 atomes de carbone, de préférence de 4 à 6, le dit radical étant éventuellement substitué.

2. Composition selon la revendication 1, **caractérisée en ce qu'**elle comprend de 5 à 14,95 % de composé (I), de 85 à 94,95 % de composé (II) et de 0,005 à 0,05 % de composé (III).

3. Composition selon l'une des revendications 1 ou 2, **caractérisée en ce que** le sulfure d'alkyle (I) est le tétrahydrothiophène (THT), le méthyl éthyl sulfure (MES), le diméthylsulfure (DMS) ou le diéthylsulfure (DES).

4. Composition selon l'une des revendications 1 à 3, **caractérisée en ce que** l' ester d'acide acrylique (II) est choisi parmi les acrylates de méthyle, d'éthyle, de n-propyle, d'isopropyle, de n-butyle, d'isobutyle, de tert-butyle, de pentyle, d'hexyle, d'heptyle, d'octyle et de dodécyle.

5. Composition selon l'une des revendications 1 à 4, **caractérisée en ce que** l' ester d'acide acrylique (II) est l'acrylate de méthyle ou l'acrylate d'éthyle.

6. Composition selon l'une des revendications 1 à 5, **caractérisée en ce qu'**elle comprend le tétrahydrothiophène et l'acrylate d'éthyle.

7. Composition selon l'une des revendications 1 à 6, **caractérisée en ce que** l'inhibiteur de formule (IV) est un composé dérivé de la tétraméthyl pipéridine oxyde de formule (IVa) : 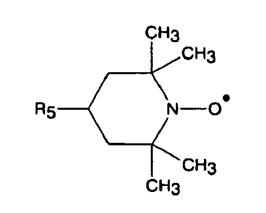 dans laquelle R⁵ représente un groupement hydroxy, amino, R⁶COO-, R⁶CON-,
où R⁶ est un radical C₁-C₄ alkyle.

8. Composition selon l'une des revendications 1 à 6, **caractérisée en ce que** le composé de formule (III) est choisi parmi le N-(tertiobutyl)-N-(1-[ethoxy(ethyl)phosphino]propyl) nitroxyde, le N-(tertiobutyl)-N-(1-diethylphosphono-2, 2-dimethylpropyl) nitroxyde, ou le N-(tertiobutyl)-N-([2-methyl-1-phenyl]propyl) nitroxyde.

9. Procédé d'odorisation d'un combustible gazeux inodore comprenant l'addition d'une quantité efficace de la composition telle que définie dans l'une des revendications 1 à 8.

10. Procédé d'odorisation selon la revendication 9, **caractérisé en ce que** le combustible gazeux est le gaz naturel.

11. Combustible gazeux comprenant une quantité comprise entre 1 et 500 mg/Nm³, de préférence entre 2 et 50 mg/Nm³ de la composition telle que définie dans l'une des revendications 1 à 8.

12. Combustible gazeux selon la revendication 11, **caractérisé en qu'**il consiste en du gaz naturel.

## Claims

1. Composition which can be used in particular as odorant for a gaseous fuel, more particularly natural gas, comprising:
- from 0.1 to 49.9% of an alkyl sulphide (I) of formula:
R¹-S-R²
in which R¹ and R², which are identical or different, represent:
- an alkyl radical comprising from 1 to 4 carbon atoms; or
- R¹ and R², taken with the sulphur atom to which they are attached, represent a saturated or unsaturated ring comprising from 3 to 5 carbon atoms which is optionally substituted by a C₁-C₄ alkyl or C₁-C₄ alkenyl radical;
- from 50 to 99.8% of an alkyl acrylate (II), the alkyl radical of which comprises from 1 to 12 carbon atoms, preferably from 1 to 8;
- from 0.001 to 0.1% of a compound (III) which inhibits the polymerization of the alkyl acrylate (II), comprising a stable nitroxide radical of formula (IV): 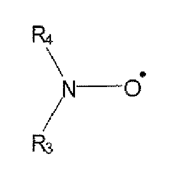
in which:
- R³ and R⁴, which are identical or different, each represent a tertiary or secondary hydrocarbon radical comprising from 2 to 30 carbon atoms, preferably from 4 to 15, and optionally one or more heteroatoms chosen from sulphur, phosphorus, nitrogen or oxygen; or
- R³ and R⁴, taken with the nitrogen atom to which they are attached, represent a cyclic hydrocarbon radical comprising from 4 to 10 carbon atoms, preferably from 4 to 6, the said radical optionally being substituted.

2. Composition according to Claim 1, **characterized in that** it comprises from 5 to 14.95% of compound (I), from 85 to 94.95% of compound (II) and from 0.005 to 0.05% of compound (III).

3. Composition according to either of Claims 1 and 2, **characterized in that** the alkyl sulphide (I) is tetrahydrothiophene (THT), methyl ethyl sulphide (MES), dimethyl sulphide (DMS) or diethyl sulphide (DES).

4. Composition according to one of Claims 1 to 3, **characterized in that** the acrylic acid ester (II) is chosen from methyl, ethyl, n-propyl, isopropyl, n-butyl, isobutyl, tert-butyl, pentyl, hexyl, heptyl, octyl and dodecyl acrylates.

5. Composition according to one of Claims 1 to 4, **characterized in that** the acrylic acid ester (II) is methyl acrylate or ethyl acrylate.

6. Composition according to one of Claims 1 to 5, **characterized in that** it comprises tetrahydrothiophene and ethyl acrylate.

7. Composition according to one of Claims 1 to 6, **characterized in that** the inhibitor of formula (IV) is a compound derived from tetramethylpiperidine oxide of formula (IVa) : 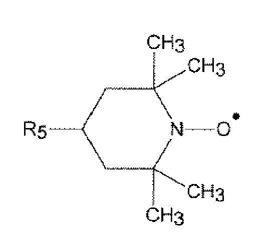 in which R⁵ represents a hydroxyl, amino, R⁶COO- or R⁶CON- group where R⁶ is a C₁-C₄ alkyl radical.

8. Composition according to one of Claims 1 to 6, **characterized in that** the compound of formula (III) is chosen from N-(tert-butyl)-N-(1-[ethoxy(ethyl)phosphino]propyl) nitroxide, N-(tert-butyl)-N-(1-diethylphosphono-2,2-dimethylpropyl) nitroxide or N-(tert-butyl)-N-(2-methyl-1-phenylpropyl) nitroxide.

9. Process for the odorization of an odourless gaseous fuel comprising the addition of an effective amount of the composition as defined in one of Claims 1 to 8.

10. Odorization process according to Claim 9, **characterized in that** the gaseous fuel is natural gas.

11. Gaseous fuel comprising an amount of between 1 and 500 mg/Sm³, preferably between 2 and 50 mg/Sm³, of the composition as defined in one of Claims 1 to 8.

12. Gaseous fuel according to Claim 11, **characterized in that** it consists of natural gas.

## Patentansprüche

1. Zusammensetzung, die insbesondere als Odorierungsmittel für gasförmige Brennstoffe und ganz besonders für Erdgas verwendbar ist und die enthält:
- 0,1 bis 49,9 % eines Alkylsulfids (I) der Formel
R¹-S-R²,
worin R¹ und R², die gleich oder verschieden sind, bedeuten:
- eine Alkylgruppe mit 1 bis 4 Kohlenstoffatomen oder
- zusammen mit dem Schwefelatom, an dem sie gebunden sind, einen gesättigten oder ungesättigten Ring mit 3 bis 5 Kohlenstoffatomen, der gegebenenfalls mit einer C₁-C₄-Alkylgruppe oder einer C₁-C₄-Alkenylgruppe substituiert ist;
- 50 bis 99,8 % eines Alkylacrylats (II), dessen Alkylgruppe 1 bis 12 Kohlenstoffatome und vorzugsweise 1 bis 8 Kohlenstoffatome aufweist,
- 0,001 bis 0,1 % einer Verbindung (III), die einen Inhibitor der Polymerisation des Alkylacrylats (II) darstellt und ein stabiles Nitroxid-Radikal der Formel (IV) 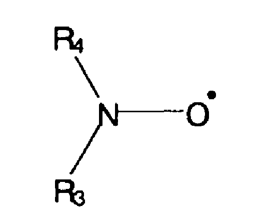 aufweist, worin bedeuten:
- R³ und R⁴, die gleich oder verschieden sind, eine tertiäre oder sekundäre Kohlenwasserstoffgruppe mit 2 bis 30 Kohlenstoffatomen und vorzugsweise 4 bis 15 Kohlenstoffatomen, die gegebenenfalls ein oder mehrere Heteroatome aufweist, die unter Schwefel, Phosphor, Stickstoff oder Sauerstoff ausgewählt sind, oder
- R³ und R⁴ zusammen mit Stickstoffatom, an dem sie gebunden sind, eine cyclische Kohlenwasserstoffgruppe mit 4 bis 10 Kohlenstoffatomen und vorzugsweise 4 bis 6 Kohlenstoffatomen, die gegebenenfalls substituiert ist.

2. Zusammensetzung nach Anspruch 1, **dadurch gekennzeichnet, dass** sie 5 bis 14,95 % Verbindung (I), 85 bis 94,95 % Verbindung (II) und 0,005 bis 0,05 % Verbindung (III) enthält.

3. Zusammensetzung nach Anspruch 1 oder 2, **dadurch gekennzeichnet, dass** das Alkylsulfid (I) Tetrahydrothiophen (THT), Methylethylsulfid (MES), Dimethylsulfid (DMS) oder Diethylsulfid (DES) ist.

4. Zusammensetzung nach einem der Ansprüche 1 bis 3, **dadurch gekennzeichnet, dass** das Alkylacrylat (II) ausgewählt ist unter Methylacrylat, Ethylacrylat, n-Propylacrylat, Isopropylacrylat, n-Butylacrylat, Isobutylacrylat, tert.-Butylacrylat, Pentylacrylat, Hexylacrylat, Heptylacrylat, Octylacrylat und Dodecylacrylat.

5. Zusammensetzung nach einem der Ansprüche 1 bis 4, **dadurch gekennzeichnet, dass** es sich bei dem Alkylacrylat (II) um Methylacrylat oder Ethylacrylat handelt.

6. Zusammensetzung nach einem der Ansprüche 1 bis 5, **dadurch gekennzeichnet, dass** sie Tetrahydrothiophen und Ethylacrylat enthält.

7. Zusammensetzung nach einem der Ansprüche 1 bis 6, **dadurch gekennzeichnet, dass** der Inhibitor der Formel (IV) eine von Tetramethylpiperidinoxid abgeleitete Verbindung der Formel (IVa) ist, 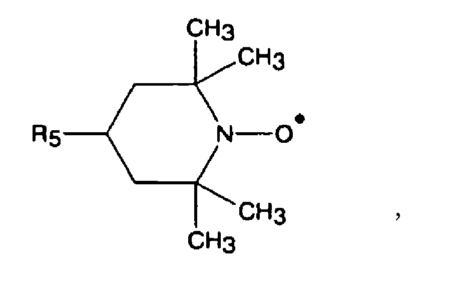 in der R⁵ eine Hydroxygruppe, eine Aminogruppe, eine Gruppe R⁶COO- oder R⁶CON- darstellt, worin R⁶ eine C₁-C₄-Alkylgruppe darstellt.

8. Zusammensetzung nach einem der Ansprüche 1 bis 6, **dadurch gekennzeichnet, dass** die Verbindung der Formel (III) ausgewählt ist unter
N-(tert.-Butyl)-N-(1-[ethoxy-(ethyl)-phosphino]-propyl)-nitroxid, N-(tert.-Butyl)-N-(1-[diethylphosphono-2,2-dimethylpropyl)-nitroxid oder
N-(tert.-Butyl)-N-([2-methyl-1-phenyl]-propyl)-nitroxid.

9. Verfahren zur Odorierung eines geruchlosen gasförmigen Brennstoffs, das den Zusatz einer wirksamen Menge der Zusammensetzung umfasst, wie sie in einem der Ansprüche 1 bis 8 definiert ist.

10. Verfahren zur Odorierung nach Anspruch 9, **dadurch gekennzeichnet, dass** es sich bei dem gasförmigen Brennstoff um Erdgas handelt.

11. Gasförmiger Brennstoff, der die Zusammensetzung, wie sie in einem der Ansprüche 1 bis 8 definiert ist, in einer Menge von 1 bis 500 mg/Nm³ und vorzugsweise einer Menge von 2 bis 50 mg/Nm³ enthält.

12. Gasförmiger Brennstoff nach Anspruch 11, **dadurch gekennzeichnet, dass** er aus Erdgas besteht.
